(19) Europäisches Patentamt
European Patent Office
Office européen des brevets

(11) Veröffentlichungsnummer: **0 213 518 B1**

# (12) EUROPÄISCHE PATENTSCHRIFT

(45) Veröffentlichungstag der Patentschrift: **11.07.90**

(51) Int. Cl.[5]: **B01D 19/04**, C08F 2/30

(21) Anmeldenummer: **86111348.8**

(22) Anmeldetag: **16.08.86**

## (54) Antischaummittel für Polymerdispersionen.

(30) Priorität: **24.08.85 DE 3530301**

(43) Veröffentlichungstag der Anmeldung: **11.03.87 Patentblatt 87/11**

(45) Bekanntmachung des Hinweises auf die Patenterteilung: **11.07.90 Patentblatt 90/28**

(84) Benannte Vertragsstaaten: **AT BE CH DE FR GB IT LI NL SE**

(56) Entgegenhaltungen:
**EP-A- 0 124 815**
**FR-A- 1 551 599**
**FR-A- 2 515 639**

(73) Patentinhaber: **Henkel Kommanditgesellschaft auf Aktien, Postfach 1100 Henkelstrasse 67, D-4000 Düsseldorf-Holthausen(DE)**

(72) Erfinder: **Höfer, Rainer, Dr., Klever Strasse 31, D-4000 Düsseldorf 30(DE)**
Erfinder: **Meffert, Alfred, Dr., Marie-Curie-Strasse 10, D-4019 Monheim(DE)**
Erfinder: **Piorr, Robert, Dr., Kieselei 12, D-4030 Ratingen-Hösel(DE)**
Erfinder: **Wegemund, Bernd, Dr., Händelweg 3, D-5657 Haan 1(DE)**
Erfinder: **Held, Uwe, Poststrasse 24, D-4010 Hilden(DE)**

EP 0 213 518 B1

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die Erfindung betrifft die Verwendung bestimmter endgruppenverschlossener Alkylpolyethylenglykolether in wäßrigen Polymerdispersionen und Latices, um diesen bestimmte Eigenschaften zu verleihen, die in mehrfacher Hinsicht gewünscht und vorteilhaft sind.

Gegenstand der DE-A 33 15 951 ist die Verwendung von Polyethylenglykolethern der nachfolgenden Formel I

$$R_1\text{-O-}(CH_2CH_2O)_n\text{-}R_2 \text{ (I)},$$

in der $R_1$ einen geradkettigen oder verzweigten Alkyl- oder Alkenylrest mit 8 - 18 C-Atomen, $R_2$ einen Alkylrest mit 4 bis 8 C-Atomen und n eine Zahl von 7 bis 12 bedeuten, als schaumdrückende Zusätze für schaumarme Reinigungsmittel. Der Einsatzzweck wird insbesondere in Reinigungsmitteln für Gewerbe und Industrie gesehen, die beispielsweise die Reinigung von Metall-, Glas-, Keramik- und Kunststoffoberflächen umfaßt. Gegenüber bekannten schaumdrückenden Zusätzen auf Basis von Anlagerungsprodukten von Alkylenoxiden anorganischer Verbindungen mit reaktiven Wasserstoffatomen im Molekül - wie sie beispielsweise aus den DE-C 1 280 455, 1 621 592, 1 289 597, 1 621 593 und 1 944 569 bekannt sind - zeichnen sich die Verbindungen der allgemeinen Formel I dadurch aus, daß sie zusätzlich biologisch abbaubar sind, nach den gesetzlichen Bestimmungsmethoden liegt ihre biologische Abbaubarkeit bei über 80 % BiAS-Abnahme.

Die DE-A 33 15 951 beschreibt darüber hinaus den Einsatz der Polyethylenglykolether der allgemeinen Formel I in Abmischung mit Polyethylenglykolethern, wie sie durch Anlagerung von 4 bis 20 Gewichtsteilen Ethylenoxid an 1 Gewichtsteil Polyglycerin mit einer Hydroxylzahl von 900 bis 1200 und anschließende Veretherung der freien Hydroxylgruppen mit Alkylhalogeniden mit 4 bis 8 Kohlenstoffatomen erhalten werden. Die Herstellung solcher Polyglycerin/Ethylenoxidether und ihre Verwendung ist Gegenstand der DE-A 33 15 952.

Gegenüber diesem Stand der Technik, der sich mit Reinigungsmittelgemischen beschäftigt, geht die vorliegende Erfindung von der Aufgabe aus, bestimmte Verbesserungen in wäßrigen Polymerdispersionen bzw. Latices einzustellen. Wäßrige Polymerdispersionen und entsprechende Latices, die durch Emulsionspolymerisation gewonnen werden, haben bekanntlich in der Technik vielfaltige Einsatzzwecke, so finden sie beispielsweise als Bindemitteldispersionen Verwendung, die bei Transport, Lagerung und Einsatzzweck den unterschiedlichsten Beanspruchungen ausgesetzt werden. Polymerdispersionen der geschilderten Art sind an sich hochsensible instabile 2-Phasen-Systeme, die unter den geschilderten Anwendungsbedingungen der Praxis zahlreichen destabilisierenden Einflüssen unterworfen sind. Ihre Stabilisierung - d.h. insbesondere die Verhinderung eines unerwünschten Aufrahmens oder Koagulierens - stellt für den Polymerfachmann einen komplexen Kreis von Problemen dar, zu dem die vielgestaltigsten Lösungsvorschläge gemacht worden sind. Polymerdispersionen bzw. -emulsionen der geschilderten Art müssen beispielsweise gegen Koagulation durch Gefrier- und Auftaueinflüsse, Elektrolytzugaben oder die bei der Formulierung zu Dispersionsfarben, Beschichtungsmitteln, Dispersionsputzen, Lederzurichtungen, Polituren, Klebstoffen, Textilhilfsmitteln oder andere dem Fachmann bekannte Einsatzgebiete auftretenden Scher- und sonstige Kräfte geschützt werden. Für diese Stabilisierungsaufgaben werden meistens nichtionogene Tenside, wie Fettalkohol-, Fettsäure-, Alkylphenol- oder Fettaminpolyglykolether eingesetzt, die aber in der Regel die Schaumentwicklung im System fördern und vielfach biologisch auch nicht befriedigend abbaubar sind.

Allgemein gilt, daß gerade für die Anwendung bei der Emulsionspolymerisation laufend neue oberflächenaktive Mittel gesucht werden, welche günstige Eigenschaften aufweisen und zwar sowohl bei Herstellung der Emulsion als auch während der Polymerisation und insbesondere hinsichtlich der Eigenschaften des entstehenden Polymerlatex. Dies gilt umso mehr, als es dem Fachmann nicht möglich ist, aus dem chemischen Aufbau eines oberflächenaktiven Mittels auch auf seine Eigenschaften als Polymerisationsemulgator bzw. -stabilisator zuverlässige Rückschlüsse zu ziehen.

Gegenstand der Erfindung ist dementsprechend in einer ersten Ausführungsform die Verwendung von Verbindungen der allgemeinen Formel I

$$R_1\text{-O-}(CH_2CH_2O)_n\text{-}R_2 \text{ (I)}$$

in der $R_1$ einen geradkettigen oder verzweigten Alkylrest oder Alkenylrest mit 8 bis 18 C-Atomen, $R_2$ einen Alkylrest mit 4 bis 8 C-Atomen und n eine Zahl von 7 bis 30 bedeuten, in wäßrigen Polymerdispersionen und Latices als emulgierender und/oder emulsionsstabilisierender, biologisch abbaubarer Bestandteil mit Schaumdämpfungsvermögen. Produkte der Formel I mit n größer 30, etwa mit n bis zu 100, wirken ebenfalls als Stabilisierungsmittel und als Emulgatoren für die Polymerisation, sind jedoch im allgemeinen nicht mehr schaumdämpfend.

Erfindungsgemäß können die Verbindungen der allgemeinen Formel I schon bei der Emulsionspolymerisation zugegen sein und hier als Emulgatoren oder Coemulgatoren gegebenenfalls im Kombination mit anderen Emulgatoren, beispielsweise anionischen Emulgatoren Verwendung finden. Ebenso ist es aber auch möglich, die Verbindung der allgemeinen Formel I nachträglich fertigen Polymerdispersionen bzw.

Latices als zusätzliches Stabilisierungsmittel zuzugeben. Verständlicherweise können diese Maßnahmen auch miteinander verbunden werden.

Zur Herstellung der erfindungsgemäß eingesetzten Verbindungen der allgemeinen Formel I wird auf die bereits zitierte DE-A 33 15 951 verwiesen. Als Ausgangsmaterial für die Herstellung dieser Polyglykolether können die natürlichen Fettalkohole beispielsweise n-Octanol, n-Decanol, n-Dodecanol, n-Tetradecanol, n-Hexadecanol, n-Octadecanol, n-Octadecen-9, 10-ol (Oleylalkohol) und/oder synthetische lineare Alkohole der genannten Kohlenstoffzahl oder mit einer ungeraden Anzahl an C-Atomen zwischen 8 und 18 einzeln oder im Gemisch eingesetzt werden.

Diese Fettalkohole werden mit Ethylenoxid im Molverhältnis von 1 : 7 bis 1 : 30 umgesetzt, anschließend werden die im erhaltenen Reaktionszwischenprodukt vorhandenen Hydroxylgruppen verethert. Die Umsetzung mit Ethylenoxid erfolgt dabei unter den bekannten Alkoxylierungsbedingungen, vorzugsweise in Gegenwart von geeigneten alkalischen Katalysatoren. Die Veretherung der freien Hydroxylgruppen wird bevorzugt unter den bekannten Bedingungen der Williamsonschen Ethersynthese mit geradkettigen oder verzweigten $C_4$-$C_8$-Alkylhalogeniden durchgeführt, beispielsweise mit n-Butyliodid, sec.-Butylbromid, tert.-Butylchlorid, Amylchlorid, tert.-Amylbromid, n-Hexylchlorid, n-Heptylbromid und n-Octylchlorid. Dabei kann es zweckmäßig sein, Alkylhalogenid und Alkali im stöchiometrischen Überschuß, beispielsweise von 100 bis 200%, über die zu verethernden Hydroxylgruppen einzusetzen.

In einer besonders bevorzugten Ausführungsform der Erfindung werden Polyglykolether der Formel I eingesetzt, in der n eine Zahl von 8 bis 20 bedeutet. Besonders bevorzugt ist weiterhin die Verwendung von Verbindungen der Formel I, in der $R_2$ den n-Butylrest bedeutet und n = 8 - 16 ist.

In einer weiteren Ausgestaltung der Erfindung werden die Polyglykolether der allgemeinen Formel I in Kombination mit Polyethylenglykolethern eingesetzt, wie sie in der eingangs genannten DE-A 33 15 952 beschrieben sind. Hierbei handelt es sich um Polyethylenglykoletherprodukte, die durch Anlagerung von 4 bis 20 Gew.-Teilen Ethylenoxid an 1 Gew.-Teil Polyglycerin mit einer Hydroxylzahl im Bereich von 900 bis 1200 und anschließende Veretherung der freien Hydroxylgruppen mit Alkylhalogeniden mit 4 bis 8 C-Atomen erhalten werden.

Polyglycerine der geschilderten Art fallen bei der großtechnischen Herstellung des Glycerins als Destillationsrückstände an. Es handelt sich dabei um Gemische aus höhermolekularen Kondensationsprodukten des Glycerins, bevorzugt aus solchen mit 2 bis 10 Glycerinresten im Molkül. Diese Polyglycerine sind durch ihre Hydroxylzahl charakterisiert, die in der Regel zwischen 900 und 1200 liegt. Entsprechende Polyglycerine können natürlich auch auf synthetischem Wege erhalten werden, beispielsweise durch längeres Erhitzen von Glycerin auf 220 bis 240°C in Gegenwart von Ätzalkali, vorzugsweise in Schutzgasatmosphäre und Abdestillieren des bei der Kondensation gebildeten Wassers.

Zur Herstellung der erfindungsgemäß gewünschtenfalls mitzuverwendenden Polyglycerinpolyglykolether setzt man zweckmäßigerweise die vorstehend beschriebenen Polyglycerine mit Ethylenoxid im Gewichtsverhältnis von 1 : 4 bis 1 : 20 um und verethert anschließend die im erhaltenen Reaktionsprodukt vorhandenen Hydroxylgruppen. Auch hier wird die Umsetzung mit Ethylenoxid unter den bekannten Alkoxylierungsbedingungen, vorzugsweise in Gegenwart von geeigneten alkalischen Katalysatoren durchgeführt. Die Veretherung der freien Hydroxylgruppen schließlich wird auch hier unter den bekannten Bedingungen der Williamsonschen Ethersynthese mit geradkettigen oder verzweigten $C_4$-$C_8$-Alkylhalogeniden durchgeführt. Die Veretherung der freien Hydroxylgruppen kann aber auch in Analogie zur DE-C 868 147 durch Umsetzung mit Isoolefinen, beispielsweise Isobutylen in Gegenwart eines sauren Katalysators erfolgen.

Werden Gemische aus den Polyglykolethern der allgemeinen Formel I mit den endgruppenverschlossenen Polyglycerinpolyglykolethern verwendet, so sind Gewichtsverhältnisse dieser Komponenten im Bereich von 1 : 1 bis 9 : 1 und insbesondere solche im Bereich von etwa 2,5 : 1 bis 9 : 1 bevorzugt, da sie sich durch starke schaumdrückende Wirkung auszeichnen. Auch diese Gemische erfüllen die gesetzlichen Anforderungen an die biologische Abbaubarkeit. Die erfindungsgemäß eingesetzten Polyglykolether bzw. Polyglykolethergemische zeichnen sich weiterhin durch Alkali- und Säurestabilität aus.

Im praktischen Einsatz enthalten die Polymerdispersionen bzw. Latices die Verbindungen der allgemeinen Formel I bzw. ihre Abmischungen mit den Polyglycerinethern üblicherweise in Mengen von etwa 0,05 bis 5 Gew.-%, bezogen auf die Trockenmasse der Dispersion. Mengen im Bereich von etwa 0,5 bis 3 Gew.-% können besonders bevorzugt sein.

## Beispiele

### Beispiel 1

Ein $C_{12-18}$-Fettalkohol + 9,1 EO-n-Butylmischether (Produkt A) wurde als entschäumender Zusatz an einer 50-prozentigen Terpolymer-Dispersion vom Typ VAc/VeoVa/AS geprüft. Die 50-prozentige Polymerdispersion enthält 33,0 Gewichsteile (GT) Vinylacetat, 14,4 GT Versaticsäure-Vinylester (VeoVa 10) und 4,8 GT Acrylsäure und wurde mit einer Mischung aus einem Laurylethersulfobernsteinsäurehalbester-Di-Na-Salz und dem Kondensationsprodukt von Nonylphenol + 30 EO hergestellt.

Der beschriebene Mischether wurde im Vergleich zu einem handelsüblichen EO/PO-Blockcopolymer und dem Kondensationsprodukt von Nonylphenol + 10 EO nach der nachfolgend beschriebenen Prüfmethode getestet. Die beschriebenen Produkte wurden mit einer Zusatzmenge von 2 %, bezogen auf Trockenmasse Polymerdispersion, eingesetzt. Vergleichsweise wurde die Prüfung der Polymerdispersion ohne Zusätze als Standard (Nullversuch) durchgeführt. Die ermittelten Ergebnisse sind der beigefügten Tabelle I zu entnehmen. Die Ergebnisse zeigen deutlich, daß durch Zusatz des beschriebenen Mischethers sehr gute Schaumzerfallseigenschaften gegenüber dem Nullversuch erzielt werden. Gegenüber dem Stand der Technik (EO/PO-Blockcopolymer) wird eine deutliche Verbesserung in der Schaumunterdrückung erzielt. Ein in der Praxis zur Stabilisierung von Polymerdispersionen zum Einsatz kommendes Nonylphenol + 10 EO führt sogar zu erhöhter Schaumbildung im Vergleich zum Standardversuch.

Beispiel 2

In Beispiel 2 (Tabelle II) wird die Wirkung unterschiedlicher Einsatzmengen von Produkt A gegenüber dem Standard (Nullversuch) verdeutlicht.

Bestimmung der Schaumeigenschaften wie Schaumentwicklung und Schaumzerfall nach der Freifallkreislaufmethode

Die Pröfung erfolgt an fertigen Polymerdispersionen.

Ausführung

50 g fertige Polymerdispersion werden mit 450 g volentsalztem Wasser verdünnt und in einen 2-l-Meßzylinder mit Heizmantel überführt. Im Regelfall wird die Prüfung bei 25°C durchgeführt. Mit Hilfe einer Laborschlauchpumpe (Typ RG-L 85, Fa. Heidolph) wird die Prüfdispersion bei einer Durchflußmenge von 3 1 • min $^{-1}$ in einen ständigen Umlauf gebracht. Die Lösung wird mit einem Glasrohr vom Boden des Meßzylinders angesaugt und über ein zweites Glasrohr in freiem Fall zurückgeführt. Das zweite Glasrohr wird so in die Prüfeinrichtung eingebaut, daß sich der Auslauf in Höhe der 2000-ml-Markierung des Meßzylinders befindet. Nach 10 min. wird das maximale Schaumvolumen (Gesamtvolumen) abgelesen und der Umlauf beendet. In der Regel stellen sich Volumina von ca. 1600 bis 2100 ml ein.

In Zeitabständen von 0,5, 1, 2, 3, 5, 10 und 20 min. wird das Gesamtvolumen abgelesen und die ermittelten Werte in ein Volumina/Zeit-Diagramm eingetragen. Die so erhaltenen Werte geben eine Aussage über die Schaumeigenschaften der Polymerdispersion.

Die beschriebene Methode kann zur Prüfung des Einflusses entschäumender Substanzen bzw. schaumarmer Tenside auf deren Schaumeigenschaften angewandt werden. In diesem Fall wird von einer Polymerdispersion das Gesamtvolumen nach 10 min. Umlauf sowie der Schaumzerfall innerhalb der vorgegebenen Zeitintervalle ermittelt. Die gefundenen Werte stellen den Standard für die weiteren Prüfungen dar. Vergleichsweise wird ein Versuch mit der zu prüfenden Substanz durchgeführt. Die Dosierung der Prüfsubstanz zur Polymerdispersion erfolgt vor dem 10-minütigen Umlauf.

Die Dosiermengen liegen je nach Produkttyp zwischen 0,1 und 20 % Prüfsubstanz, bezogen auf Trockenmasse der Dispersion.

Die gefundenen Werte finden sich in Tabelle II.

**T a b e l l e I** [xx)]

| Zusatz (Art/Menge bezogen auf Trockenmasse der Dispersion) | | Schaumzerfall in ml Schaumhöhe nach 0 min | 0,5 min | 3 min | 5 min | 10 min | 20 min |
|---|---|---|---|---|---|---|---|
| kein Zusatz | – | 2000 | 2000 | 1800 | 1700 | 900 | 560 |
| Produkt A | 2 % [x)] | 2000 | 1950 | 1700 | 1350 | 520 | 400 |
| Nonylphenol 10 EO | 2 % | 2000 | 2000 | 1850 | 1800 | 1100 | 600 |
| handelsüblicher Entschäumer EO/PO-Addukt) | 2 % | 2000 | 2000 | 1800 | 1500 | 600 | 400 |

**Tabelle II xx)**

| Zusatz (Art/Menge bezogen auf Trockenmasse der Dispersion) | | Schaumzerfall in ml Schaumhöhe nach 0 min | 0,5 min | 3 min | 5 min | 10 min | 20 min |
|---|---|---|---|---|---|---|---|
| Produkt A | 0,2 % | 2000 | 2000 | 1950 | 1750 | 1200 | 580 |
| Produkt A | 1,0 % | 2000 | 2000 | 1700 | 1560 | 900 | 460 |
| Produkt A | 2,0 % | 2000 | 1980 | 1700 | 1500 | 750 | 420 |
| Produkt A | 10,0 % | 2000 | 1950 | 1670 | 1500 | 600 | 420 |
| Produkt A | 20,0 % | 2000 | 1900 | 1600 | 1460 | 600 | 520 |
| kein Zusatz | - | 2000 | 2000 | 1950 | 1850 | 1680 | 1150 |

x) bezogen auf Trockenmasse der Polymerdispersion

xx) Die Versuchsergebnisse sind nur innerhalb einer Versuchsreihe vergleichbar.

Beispiel 3

Weitere geprüfte Produkte

| Produkt | Chem. Zusammensetzung |
| --- | --- |
| B | $C_{12/18}$-Fettalkohol + 7,5 EO-$C_4$ |
| C | $C_{12/18}$-Fettalkohol + 8,0 EO-$C_4$ |
| D | $C_{12/18}$-Fettalkohol + 9,0 EO-$C_4$ |
| A | $C_{12/14}$-Fettalkohol + 9,1 EO-$C_4$ |
| E | $C_{12/18}$-Fettalkohol + 10,0 EO-$C_4$ |
| F | $C_{12/14}$-Fettalkohol + 16,0 EO-$C_4$ |

Alle Substanzen hatten etwa 100 % Aktivsubstanzgehalt. Die Ergebnisse finden sich in Tabelle III.

## T a b e l l e III

| Zusatz (Art/Menge bezogen auf Trockenmasse der Dispersion) | | Schaumzerfall in ml Schaumhöhe nach 0 min | 0,5 min | 3 min | 5 min | 10 min | 20 min |
|---|---|---|---|---|---|---|---|
| kein Zusatz | - | 2000 | 2000 | 1800 | 1700 | 900 | 550 |
| Produkte B - F | 2 % | 2000 | 1950 - 2000 | 1700 - 1750 | 1400 - 1500 | 600 - 650 | 450 - 500 |
| Produkt A | 2 % | 2000 | 1950 | 1700 | 1350 | 530 | 400 |

Beispiel 4

Verwendung eines $C_{12-18}$-Fettalkohols + 9,1 EO-n-Butylmischether (Produkt A) als Polymerisationsemulgator.

Prüfrezeptur:

Zur Prüfung wurden pro Versuch 3 Lösungen hergestellt.

Lösung 1:

1,3 g Emulgator X (100 %ig)
0,5 g Kaliumperoxydisulfat
0,2 g Borax
191,7 g vollentsalztes Wasser

Lösung 2:

0,8 g Emulgator X (100 %ig)
2,1 g Borax
1,9 g Kaliumperoxydisulfat
12,0 g Emulgator Y (100 %ig)
288,4 g vollentsalztes Wasser

Lösung 3:

330,1 g Vinylacetat
143,5 g Versaticsäure-Vinylester
4,8 g Acrylsäure
23,9 g 10 %ige Ammoniumcarbonatlösung

Beispiel 4.1 (Vergleichsbeispiel)

Es wurde mit einer üblichen Kombination aus anionischen und nichtionischen Emulgatoren gearbeitet. Als anionischer Emulgator X wurde in Lösung 1 eine 33,4 %ige wäßrige Lösung eines Na-Fettsäuremethylestersulfonats, und in Lösung 2 als nichtionogener Emulgator Y eine 70 %iges Nonylphenol + 30 EO sowie weitere 0,8 g Aktivsubstanz des anionaktiven Emulgators X eingesetzt.

Beispiel 4.2 (erfindungsgemäß)

In Lösung 2 wurde als nichtionogener Emulgator Y statt Nonylphenol + 30 EO das erfindungsgemäße Produkt A eingesetzt.

Bei allen Versuchen wurde die Gesamtmenge durch Zufügen oder Weglassen von Wasser auf 1000 g eingestellt.

Polymerisationsverfahren

Die Komponenten der Lösung 1 werden in das Reaktionsgefäß vorgelegt, mit Stickstoff gespült und auf 80°C geheizt. Während der Aufheizpause wird im Vorlagegefäß durch Zugabe der Monomerlösung 3 zur emulgatorhaltigen wäßrigen Phase Lösung 2 durch kräftiges Rühren eine Präemulsion hergestellt. Der pH-Wert der Präemulsion wird auf 3,8 bis 4,0 eingestellt. Bei Erreichen einer Reaktorinnentemperatur von 80°C wird mit der Dosierung der Monomerpräemulsion begonnen. Die Dauer der Dosierung beträgt 2 bis 2,5 Stunden. Nach beendeter Zugabe wird die Temperatur des Reaktionsgemisches weitere 2 Stunden bei 80°C gehalten. Die Dispersion wird abegekühlt und filtriert und der pH-Wert mit 23,9 g einer 10 %igen Ammoniumcarbonat-Lösung auf 7,0 bis 7,5 eingestellt, wozu die angegebenen Mengen an Ammoniumcarbonat-Lösung eingesetzt wurden.

Ergebnis:

Es wurden Dispersionen mit weniger als etwa 0,4 % Koagulat (bezogen auf Trockenmasse) erhalten. Die Dispersion nach 4.2 waren schaumarm. So zeigte die Dispersion in der vorgeschilderten Meßanordnung nach 0,5 Minuten 1700 ml Schaumhöhe, nach 5 Minuten 800 ml und nach 10 Minuten nur mehr 480 ml.

Die Dispersion nach Vergleichsbeispiel 4.1 zeigte demgegenüber nach 0,5 Minuten 1900 ml Schaumhöhe, nach 5 Minuten 1500 ml und nach 10 Minuten noch 900 ml Schaumhöhe.

Beispiel 4.3

In Lösung 1 und 2 von Beispiel 4.1 wurde der anionaktive Emulgator X durch das erfindungsgemäße nichtionogene Produkt A ersetzt. Der nichtionogene Emulgator Y (Nonylphenol + 30 EO) wurde unverändert in Lösung 2 beibehalten.

Es entstand eine rein durch nichtionogene Emulgatoren stabilisierte Polymerdispersion. Der bei der Polymerisation entstehende Koagulatgehalt war wie bei 4.1 und 4.2 kleiner 0,4 %. Die entstehende Polymerdispersion war grobteilig und sehr schaumarm.

## Patentansprüche

1. Verwendung von Verbindungen der allgemeinen Formel I

$$R_1\text{-}O\text{-}(CH_2CH_2O)_n\text{-}R_2 \qquad (I),$$

in der $R_1$ einen geradkettigen oder verzweigten Alkylrest oder Alkenylrest mit 8 bis 18 C-Atomen, $R_2$ einen Alkylrest mit 4 bis 8 C-Atomen und n eine Zahl von 7 bis 30 bedeuten, in wäßrigen Polymerdispersionen und Latices als emulgierender und/oder emulsionsstabilisierender, biologisch abbaubarer Bestandteil mit Schaumdämpfungsvermögen.

2. Ausführungsform nach Anspruch 1, dadurch gekennzeichnet, daß die Verbindung der Formel I.

a) ganz oder teilweise schon bei der Emulsionspolymerisation zugegen sind und/oder

b) der fertigen Polymerdispersion zugegeben werden.

3. Ausführungsform nach Ansprüchen 1 und 2, dadurch gekennzeichnet, daß die Verbindungen der Formel I bei der Emulsionspolymerisation als nicht-ionogene Emulgatoren oder Co-Emulgatoren verwendet werden.

4. Ausführungsform nach Anspruch 1, dadurch gekennzeichnet, daß in den Verbindungen der allgemeinen Formel I n eine Zahl von 8 bis 20 und insbesondere von 8 - 16 bedeutet und daß $R_2$ bevorzugt den n-Butylrest bedeutet.

5. Ausführungsform nach Ansprüchen 1 bis 4, dadurch gekennzeichnet, daß die Verbindungen der allgemeinen Formel I im Gemisch zusammen mit Polyethylenglykolethern verwendet werden, die durch Anlagerung von 4 bis 20 Gewichtsteilen Ethylenoxid an 1 Gewichtsteil Polyglycerin mit einer Hydroxylzahl von 900 bis 1200 und anschließende Veretherung der freien Hydroxylgruppen mit Alkylhalogeniden mit 4 bis 8 C-Atomen erhalten worden sind, wobei vorzugsweise Gewichtsverhältnisse der Verbindungen der allgemeinen Formel I zu den Polyglycerinverbindungen im Bereich von etwa 1 : 1 bis 9 : 1 verwendet werden.

6. Ausführungsform nach Ansprüchen 1 bis 5, dadurch gekennzeichnet, daß die Verbindungen der allgemeinen Formel I in den Polymerdispersionen bzw. Latices in Mengen von 0,05 bis 5 Gew.-%, vorzugsweise in Mengen von 0,5 bis 3 Gew.-% - jeweils bezogen auf die Trockenmasse der Dispersion - vorliegen.

## Claims

1. The use of compounds corresponding to the following general formula

$$R_1\text{–}O\text{–}(CH_2CH_2O)_n\text{–}R_2 \qquad (I)$$

in which $R_1$ is a straight-chain or branched $C_{8-18}$ alkyl or alkenyl group, $R_2$ is a $C_{4-8}$ alkyl group and n is a number of from 7 to 30, as an emulsifying and/or emulsion-stabilizing, biodegradable constituent having foam-inhibiting properties in aqueous polymer dispersions and latices.

2. The use claimed in claim 1, characterized in that the compounds corresponding to formula I

a) are completely or partly present during the actual emulsion polymerization and/or

b) are added to the polymer dispersion.

3. The use claimed in claims 1 and 2, characterized in that the compounds corresponding to formula I are used as nonionic emulsifiers or co-emulsifiers in the emulsion polymerization.

4. The use claimed in claim 1, characterized in that, in the compounds corresponding to general formula I, n is a number of from 8 to 20 and more especially from 8 to 16 and in that $R_2$ is preferably the n-butyl radical.

5. The use claimed in claims 1 to 4, characterized in that the compounds corresponding to general formula I are used in admixture with polyethylene glycol ethers obtained by addition of from 4 to 20 parts by weight of ethylene oxide onto 1 part by weight of polyglycerol having a hydroxyl value of from 900 to 1,200 and subsequent etherification of the free hydroxyl groups with $C_{4-8}$ alkyl halides, the compounds corresponding to general formula I preferably being used in ratios by weight to the polyglycerol compounds of from about 1:1 to 9:1.

6. The use claimed in claims 1 to 5, characterized in that the compounds corresponding to general formula I are present in the polymer dispersions or latices in quantities of from 0.05 to 5% by weight and preferably in quantities of from 0.5 to 3% by weight, based in each case on the dry matter content of the dispersion.

**Revendications**

1. Utilisation de composés de la formule générale I

$$R_1-O-(CH_2CH_2O)_n-R_2 \qquad (I)$$

dans laquelle $R_1$ est un résidu alkyle ou alcényle à chaîne droite ou ramifiée comportant 8 à 18 atomes de C, $R_2$ est un résidu alkyle comportant 4 à 8 atomes de C et n est un nombre de 7 à 30, dans des dispersions aqueuses de polymères et dans des latex, comme constituant biodégradable émulsifiant et/ou stabilisant d'émulsion à pouvoir antimoussant.

2. Variante selon la formule 1, caractérisée en ce que les composés de la formule I
a) sont déjà présents totalement ou partiellement lors de la polymérisation de l'émulsion et/ou
b) sont ajoutés à la dispersion de polymères toute préparée.

3. Variante selon les revendications 1 et 2, caractérisée en ce que les composés de la formule I sont mis en œuvre lors de la polymérisation d'émulsion comme émulsifs ou coémulsifiants non ioniques.

4. Variante selon la revendication 1, caractérisée en ce que dans les composés de la formule générale I, n est un nombre de 8 à 20 et en particulier de 8 à 16, et que $R_2$ représente de préférence le résidu n-butylique.

5. Variante selon les revendications 1 à 4, caractérisée en ce que les composés de la formule générale I sont mis en œuvre en mélange avec des polyéthylèneglycoléthers, qui sont obtenus par addition de 4 à 20 parties en poids d'oxyde d'éthylène à 1 partie en poids de polyglycérine avec un indice d'hydroxyle de 900 à 1200, suivie d'éthérification des groupements hydroxyle libres avec des halogénures d'alkyle comportant 4 à 8 atomes de C, les composés de la formule générale I étant mis en œuvre de préférence dans un rapport pondéral compris dans l'intervalle d'environ 1:1 à 9:1 vis-à-vis des composés de polyglycérine.

6. Variante selon les revendications 1 à 5, caractérisée en ce que les composés de la formule générale I sont présents dans les dispersions de polymères ou dans les latex en proportions de 0,05 à 5% en poids, de préférence en proportions de 0,5 à 3% en poids par rapport à la masse sèche de la dispersion.